# EUROPEAN PATENT APPLICATION

(11) **EP 1 710 006 A2**
(43) Date of publication of application: **11.10.2006**
(21) Application number: 06112277.6
(22) Date of filing: 06.04.2006
(51) Int. Cl.: B01D 17/00, B01D 17/022, B01D 17/04, B01D 35/143, C02F 1/28

(54) **Separator device for a liquid mixture**

(30) Priority: 07.04.2005 IT UD20050054
(71) Applicant: Officine Meccaniche Industriali S.r.l., 34070 FOGLIANO-REDIPUGLIA GO (IT)
(72) Inventor: Capellari, Giovanni Battista, 33100, UDINE (IT); Massaro, Fabio, 37100, VERONA (IT); Trombin, Filippo, 37100, VERONA (IT)
(74) Representative: Petraz, Davide Luigi

(57) **Abstract**

Separator device for a liquid mixture containing impurities to be removed, the device comprising a container (11), equipped with an inlet (12) for the mixture to be filtered and an outlet (13) for the purified liquid to be discharged, and at least a filtering element (16, 25) disposed inside the container (11) and able to remove said impurities from the liquid mixture. The filtering element (16, 19) has a fixed position inside the container (11) and is associated with means that detect the progress of its saturated condition, in order to signal to the user, when said saturated condition is reached, the need for replacement or an intervention of another type, of said filtering element (16). The detection means comprises one or more electric sensors (22, 23) disposed over the length of the filtering element (16, 19), and suitable to detect a variation in the electric capacity due to the increase in the quantity of impurities to be removed, absorbed by the filtering element (16, 19), and an electronic card (30) that signals to the user when the electric capacity detected corresponds to a saturated condition of the filtering element (16, 19).

## Description

### FIELD OF THE INVENTION

The present invention concerns a separator device for a liquid mixture, able to be used in particular but not exclusively in order to separate water and oil from the condensation generated in a plant producing compressed air.

### BACKGROUND OF THE INVENTION

It is known that in plants producing compressed air, particularly in the zone of the plant where the compressed air cools until it reaches the temperature corresponding to its dew point, little drops of water mixed with oil are formed. To allow the discharge and disposal of the condensation in a drain or in the ground, specific anti-pollution norms establish that the oil must be separated from the water until the content in the mixture has been reduced to a minimum value, for example less than 5-10 parts per million.

In the state of the art various types of water-oil separators are known, which normally provide a container inside which at least a filtering element is disposed, for example of the adsorbent type, through which the mixture is made to pass in order to separate the oil and possible other impurities contained in said mixture. The filtering element can consist, for example, of a bag containing oil-adsorbent material or other equivalent material.

Some solutions known in the state of the art provide to use a configuration in which, as the filtering element gradually increases in weight due to the adsorption of a growing quantity of oil, it moves downwards in the container, to a lower limit position which corresponds to a state of complete saturation. Therefore, when the filtering element reaches the lower position it is no longer able to perform its function in an optimum manner and must be replaced. That this position has been reached is signaled to the user through suitable means visible from the outside.

This solution, although effective, has some disadvantages due to the movement itself of the filtering element inside the container. Another disadvantage may derive from the fact that, when the lower limit position is reached, this does not always correspond to a condition of complete inefficiency of the filtering element, or that the saturated condition is not signaled promptly to the user.

Other known solutions, for example disclosed in US-A-5,328,598 and JP-A-04334505, provide to use electric sensors positioned inside the filter itself, or on a filtering plate positioned downstream of the filter. The sensors are able to measure the variation in electric resistance of a current through which the flow of mixture to be separated passes and, by means of suitable devices connected thereto, are able to indicate the variation in efficiency of the filter.

JP'505 concerns a device to remove humidity and material not soluble in water from a fluoro-carbon liquid used in an electronic device, while US'598 concerns a device to purify water from contaminating agents.

Both these documents therefore do not concern devices to separate water and oil from a plant producing compressed air.

Moreover, these known devices have the disadvantage that every time it is necessary to intervene on the electric sensors, for any maintenance, repair or replacement whatsoever, it is necessary to dispose of the entire mixture, which is highly polluting, inside the container where there is the filtering separation element.

The purpose of the present invention is to achieve a separator device of the type indicated above in which it is permitted to the user to verify the state of saturation of the filtering element reliably, so that he can thus provide to replace it, without requiring, both for economic and also for environmental reasons connected to the fact of having to dispose of the whole mixture present in the liquid separator, to replace the entire detection system consisting of the detection system plus the filter.

The Applicant has devised, tested and embodied the present invention to obtain this purpose, thus overcoming the shortcomings of the state of the art and to obtain other advantages as identified hereafter.

### SUMMARY OF THE INVENTION

The present invention is set forth and characterized in the main claim, while the dependent claims describe other characteristics of the invention or variants to the main inventive idea.

According to the invention, the separator device for a liquid mixture comprises a container equipped with at least an inlet for the mixture to be filtered and at least an outlet for the purified liquid, normally water, to be discharged. Inside the container there is at least one filtering element, preferably of the adsorbent type, suitable to remove from the liquid mixture the component to be filtered, for example particles of oil.

There may also be a second filtering element present too, downstream of the first, suitable to adsorb from the liquid mixture the residual impurities not retained by the first filtering element.

According to a characteristic of the present invention, the filtering element has a fixed position inside the container, and is associated with means able to detect the progress of its saturated condition, in order to signal to the user, when this saturated condition is reached, the need to replace it, or for an intervention of another type on the filtering element.

According to the invention, the detection means comprises one or more electric sensors or electrodes, disposed in a suitable seating or niche made on the inner wall of the container, and in contact with the filtering element, in particular, disposed distanced with respect to each other in respective points over the height of said filtering element or, in the case of one sensor only, disposed so as to cover a segment of the height of the filtering element. The sensors are suitable to detect a variation in the electric capacity following the increase in the quantity of oil, or other impurity to be removed, absorbed by the filter, and to signal, for example with a luminous and/or acoustic signal, when the electric capacity detected corresponds to a saturated condition of the filtering element.

This solution, due to the presence of the niche in which the whole electric detection system is housed, thus allows an easy replacement of the saturated filtering element without having to perform any replacement of or maintenance on the electric detection system, and allows to intervene on the electric detection system without requiring the total removal of the polluting mixture present inside the container.

According to the invention, the fixed position of the filtering element inside the container ensures a better, constant and uniform functioning thereof, until the saturated condition is reached. Moreover, the saturated condition is signaled to the user promptly and with greater reliability compared to known solutions. A display disposed outside the container can be used, possibly associated with acoustic means, in order to signal this condition to the user.

### BRIEF DESCRIPTION OF THE DRAWINGS

These and other characteristics of the present invention will become apparent from the following description of a preferential form of embodiment, given as a non-restrictive example with reference to the attached drawings wherein:

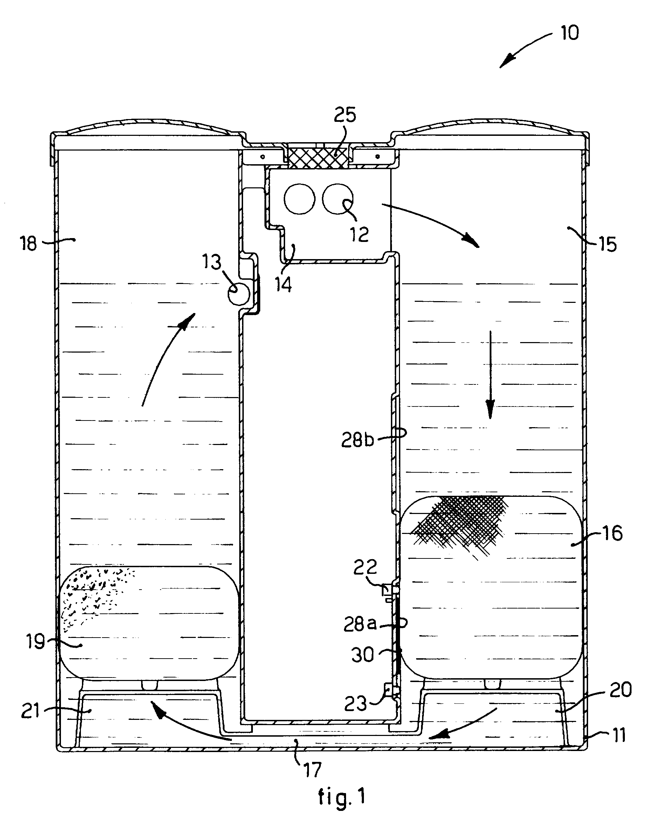

- fig. 1 shows a partial section of a preferred embodiment of the present invention.

### DETAILED DESCRIPTION OF SOME PREFERENTIAL FORMS OF EMBODIMENT OF THE INVENTION

With reference to the attached drawings, the reference number 10 denotes generally a separator device for a liquid mixture, for example of the type suitable to separate oil from the condensation water generated in a plant producing compressed air.

The device 10 comprises a substantially closed container 11 equipped with a first aperture 12 through which the mixture to be purified enters, and a second aperture 13 through which the purified water exits, to be sent for discharge.

In a position adjacent to the inlet aperture there is a depressurization chamber 14 in which the inlet pressure of the mixture is reduced, with a possible discharge of residual compressed air to the outside. In particular, when the mixture is introduced inside the depressurization chamber 14, the possible residual compressed air is discharged through an anti-odor filter 25, for example of the active carbon type.

The mixture of refluent condensation, consisting mainly but not exclusively of water and oil, flows due to gravity inside a first chamber 15, defined inside the container 11, in which a first filtering element 16 of the adsorbent type is located, for example made of polypropylene, or other analogous or comparable material suitable for the purpose.

The filtering element 16 is disposed fixed and resting on a shelf-type element 20 and is suitable to retain the particles of oil present in the liquid mixture, whereas it is impermeable to water, which is thus free to flow through the channel 17 made in the lower part of the container 12.

In particular, the channel 17 puts the first chamber 15 of the container 12 in communication with a second chamber 18, in this case parallel to the first chamber 15, inside which there is a second filtering element 19, also disposed fixed and resting on a shelf element 21.

The second filtering element 19 is also advantageously of the adsorbent type, for example of the type containing active carbons, and is suitable to remove from the current of water possible traces of oil or other impurities not retained by the first filtering element 16.

The water thus "treated", exiting from the second filtering element 19, has a minimum residual value of polluting contaminants and can therefore be freely discharged outside by means of the outlet aperture 13. The outlet aperture 13 can be positioned at a variable height from the bottom of the container 11 to the upper part of the first filtering element 16, which can therefore be partly or totally immersed in the water.

An advantageous solution of the invention provides that the outlet aperture is located at a level of about the first upper third of the height of the first filtering element 16, although this condition is not obligatory in the framework of the invention.

According to the form of embodiment of the invention shown in fig. 1, in order to determine when the first filtering element 16 is saturated with oil, there are sensors or electrodes 22 and 23, mounted on the filtering element 16, at a certain distance from each other along the height of the filtering element 16, or a single sensor is present which extends for a certain length over the height of the filtering element 16. The sensors 22, 23, or the single sensor, are housed inside a suitable seating or niche 28a, in which an electronic card 30 is also housed and receives the detection signals from the sensors 22, 23 and signals, for example to a further electronic control unit, not shown, and housed, for example, in the container 11 in the room between the two chambers 15 and 18, the progressive variation in capacity of the filtering element 16 due to the adsorption of oil by the filtering element 16. The niche 28a is made on the inner wall of the container 11, so that it is possible both to replace the filtering element 16 without interfering with the sensors 22, 23, and also to perform maintenance or replacement operations on the electrodes 22, 23, and on the electronic card 30, without every time having to remove, and hence dispose of, the polluting mixture present inside the container 11.

In the embodiment shown here, the inner part of the container 11 has a second niche 28b, where the sensors 22, 23 and the electronic card 30 can be housed, if the filter 16 is of a bigger size than that shown, or if it is located at a greater height than that shown.

Due to its dielectric characteristics, the progressive increase in the quantity of oil adsorbed by the first filtering element 16 determines a reduction in the electric capacity measured over the distance between the two sensors 22, 23, or over the lenght of the single sensor mounted on the card 30. When the value of this capacity reaches a preset level, which corresponds to a desired level of saturation with oil of the first filtering element 16, the electronic card 30 signals this situation to the possible external control unit, which in turns commands a signal to be emitted, for example optical or acoustic, which warns the user that the state of saturation has been reached. The user can thus provide to replace the filtering element 16, or otherwise intervene to restore it, as said, without interfering with the electrodes 22, 23 positioned in their housing seating 28a.

It is clear, however, that modifications and/or additions of parts may be made to the separator device 10 as described heretofore, without departing from the scope of the present invention.

For example, the container 11 could comprise a single chamber with the filters 16 and 19 positioned serially one on top of the other, in contact with each other or separated, for example, by a diaphragm which excludes contact between them. In this case, the outlet aperture 13 will always be positioned, for example by means of a supplementary pipe, above the second filtering element 19 and at a distance such as to partly or totally cover the first filtering element 16.

Another embodiment can also provide only the first filtering element 16 located in the first chamber 15 with the outlet aperture 13 associated with a separate pipe positioned at a variable height from the bottom to the upper part of the filtering element 16.

It is also clear that the means to detect that the saturated position has been reached can be associated not only with the first filtering element 16 as described here, but also with the second filtering element 19, which could also be of the same type as the first filtering element 16.

## Claims

1. Separator device for a liquid mixture containing impurities to be removed, the device comprising a container (11), equipped with at least an inlet (12) for the mixture to be filtered and at least an outlet (13) for the purified liquid to be discharged, and at least a filtering element (16, 19) disposed inside the container (11) and able to remove said impurities from the liquid mixture, wherein the filtering element (16, 19) has a fixed position inside the container (11) and is associated with means able to detect the progress of its saturated condition, in order to signal to the user, when said saturated condition is reached, the need for replacement or an intervention of another type, of said filtering element (16), **characterized in that** said detection means comprises one or more electric sensors (22, 23) disposed over the height of said filtering element (16, 19), and suitable to detect a variation in the electric capacity due to the increase in the quantity of impurities to be removed, absorbed by the filtering element (16, 19), and an electronic card (30) able to signal to the user when the electric capacity detected corresponds to a saturated condition of the filtering element (16, 19).

2. Separator device as in claim 1, **characterized in that** said electric sensors (22, 23) and/or said electronic card (30) are housed inside a seating or niche (28a, 28b) made on the inner wall of said container (11) in order to be disposed in contact with said filtering element (16, 19).

3. Separator device as in claim 1 or 2, **characterized in that** said electric sensors (22, 23) are at least two and are placed distanced with respect to each other in respective points over the height of said filtering element (16).

4. Separator device as in claim 1 or 2, **characterized in that** it comprises one electric sensor mounted on said card (30), which sensor extends for a segment over the height of said filtering element (16).

5. Separator device as in any claim hereinbefore, **characterized in that** it comprises a first (16) and a second (19) filtering element, disposed resting on respective shelf elements (20, 21) made inside said container (11).

6. Separator device as in claim 5, **characterized in that** said first (16) and second (19) filtering element are disposed in respective chambers (15; 18) substantially parallel and connected by a communication channel (17).

7. Separator device as in claim 5, **characterized in that** said first (16) and second (19) filtering element are disposed one after the other in contact or separated from each other by a diaphragm element.

8. Separator device as in claim 1, **characterized in that** in a position adjacent to the inlet aperture (12) there is a depressurization chamber (14) in which the inlet pressure of the mixture is reduced with possible discharge of residual air to the outside.

9. Separator device as in claim 8, **characterized in that** the residual compressed air is discharged through an anti-odor filter (25), for example of the active carbon type.
